# EUROPÄISCHE PATENTANMELDUNG

(11) **EP 2 975 294 A2**
(43) Veröffentlichungstag der Anmeldung: **20.01.2016**
(21) Anmeldenummer: 15176028.7
(22) Anmeldetag: 09.07.2015
(51) Int. Cl.: F16F 15/16, F16F 15/123, F16H 45/02

(54) **NASSRAUM-ROTATIONSBAUTEIL, NASSRAUM-BAUGRUPPE SOWIE DREHMOMENTÜBERTRAGUNGSEINRICHTUNG**

(30) Priorität: 14.07.2014 DE 102014213618
(71) Anmelder: Schaeffler Technologies AG & Co. KG, 91074 Herzogenaurach (DE)
(72) Erfinder: Schnädelbach, David, 76534 Baden-Baden-Neuweier (DE); Baier, David, 69207 Sandhausen (DE); Eckerle, Matthias, 77815 Bühl (DE)

(57) **Zusammenfassung**

Die Erfindung betrifft ein Nassraum-Rotationsbauteil, bevorzugt ein Dämpferrotationsbauteil (10, 20) eines Torsionsschwingungsdämpfers (1) für einen Wandler (0) eines Fahrzeugs, insbesondere eines Personenkraftwagens, mit einer in eine Umfangsrichtung des Nassraum-Rotationsbauteils umlaufenden Lagerfläche (112, 114, 212, 214) zum Lagern des Nassraum-Rotationsbauteils auf/an einem zweiten Nassraum-Rotationsbauteil, wobei das Nassraum-Rotationsbauteil wenigstens einen darin/daran vorgesehenen Schmierstoffkanal (300) für einen Transport eines Schmierstoffs zur Lagerfläche aufweist, wobei der Schmierstoffkanal an einer ausgewählten Stelle an/in der Lagerfläche mündet.

Die Erfindung betrifft ferner eine Nassraum-Baugruppe, bevorzugt eine DämpferBaugruppe eines Torsionsschwingungsdämpfers für einen Wandler eines Fahrzeugs, insbesondere eines Personenkraftwagens, mit einem Nassraum-Rotationsbauteil und einem zweiten Nassraum-Rotationsbauteil, wobei zwischen dem Nassraum-Rotationsbauteil und dem zweiten Nassraum-Rotationsbauteil eine in eine Umfangsrichtung der Nassraum-Baugruppe erstreckende Lagerung ausgebildet ist, wobei die Nassraum-Baugruppe wenigstens einen Schmierstoffkanal aufweist, durch welchen hindurch ein Schmierstoff selektiv an/in die Lagerung transportierbar ist.

## Beschreibung

Vorliegende Erfindung betrifft ein Nassraum-Rotationsbauteil, bevorzugt ein Dämpferrotationsbauteil eines Torsionsschwingungsdämpfers für einen Wandler eines Fahrzeugs, insbesondere eines Personenkraftwagens. Ferner betrifft die Erfindung eine Nassraum-Baugruppe, bevorzugt eine Dämpfer-Baugruppe eines Torsionsschwingungsdämpfers für einen Wandler eines Fahrzeugs, insbesondere eines Personenkraftwagens. Des Weiteren betrifft die vorliegende Erfindung eine Drehmomentübertragungseinrichtung, insbesondere ein Getriebe, einen Wandler oder einen Torsionsschwingungsdämpfer für ein Fahrzeug.

An einer Kurbelwelle eines periodisch arbeitenden Verbrennungsmotors eines Kraftfahrzeugs treten in dessen Betrieb bei einer Rotation der Kurbelwelle sich überlagernde Drehungleichförmigkeiten auf, wobei sich deren Art und/oder Frequenz mit einer Drehzahl der Kurbelwelle ändern. Vergleichsweise starke Drehungleichförmigkeiten entstehen im Betrieb des Kraftfahrzeugs bei einem sich verändernden Drehmoment des Verbrennungsmotors, z. B. bei einer sich ändernden Drehmomentanforderung durch einen Fahrer des Kraftfahrzeugs. Ferner werden durch Verbrennungsvorgänge im Verbrennungsmotor insbesondere im Zugbetrieb Drehschwingungen im Antriebsstrang des Kraftfahrzeugs angeregt.

Zur Verringerung der Drehungleichförmigkeiten und/oder der Drehschwingungen im Antriebsstrang kann ein Torsionsschwingungsdämpfer ggf. mit einer Fliehkraftpendeleinrichtung eingesetzt sein, wobei der Torsionsschwingungsdämpfer im Wesentlichen vergleichsweise starke Drehungleichförmigkeiten und die Fliehkraftpendeleinrichtung im Wesentlichen periodische Drehschwingungen über einen Drehzahlbereich des Verbrennungsmotors im Wesentlichen tilgen kann. Der Torsionsschwingungsdämpfer, welcher auch als Drehschwingungsdämpfer bezeichenbar ist, kann insbesondere als eine Dämpfungseinrichtung zwischen dem Verbrennungsmotor und einem herkömmlichen Getriebe oder einem Automatikgetriebe des Kraftfahrzeugs eingesetzt sein.

So können Torsionsschwingungsdämpfer beispielsweise an/in Zweimassenwandlern, in Wandlern bzw. an hydrodynamischen Drehmomentwandlern oder an/in Kupplungsscheiben oder Lamellenträgern von Reibkupplungen eingesetzt sein. Hierbei ist eine Fliehkraftpendeleinrichtung oft ein Bestandteil eines Torsionsschwingungsdämpfers, wobei die Fliehkraftpendeleinrichtung z. B. einer Turbine bzw. einem Turbinenrad eines hydrodynamischen Drehmomentwandlers eines Automatikgetriebes zugehörig sein kann. - Aufgrund eines Kostendrucks, einer gestiegenen Performanz und/oder permanent kleiner werdender Bauräume in den Antriebssträngen von Kraftfahrzeugen treten zunehmend Angelegenheiten in einen Fokus der Entwickler, welche bis dato nur geringfügige bzw. einfach zu behebende Probleme verursachten.

Ein solcher Problembereich besteht beim Auslegen von Rotationsbauteilen eines Torsionsschwingungsdämpfers mit einer oder einer Mehrzahl von Dämpferstufen für einen vergleichsweise kleinen Bauraum. Im Stand der Technik ist ein Rotationsbauteil, z. B. eine Dämpferscheibe, des Torsionsschwingungsdämpfers mit einem geschlossenen, d. h. ununterbrochenen Innendurchmesser und einem geringen radialen Spiel auf einem geschlossenen, ununterbrochenen Außendurchmesser eines anderen Rotationsbauteils, z. B. einer Dämpfernabe, des Torsionsschwingungsdämpfers zentriert, d. h. radial gelagert. Ferner ist die Dämpferscheibe oft an einen geschlossenen, ununterbrochenen Absatz der Dämpfernabe seitlich mit einem geschlossenen, ununterbrochenen inneren Durchmesserabschnitt angelegt und mit einem weiteren Bauteil, wie z. B. einem Sicherungsring oder einem Axiallagerblech und einem Sicherungsring, gegenüberliegend zum Absatz axial gesichert, d. h. gelagert.

Z. B. bei Torsionsschwingungsdämpfern, die in einem Nassraum, beispielsweise in einem mit einem Schmierstoff gefluteten Wandlerraum eines Automatikgetriebes, arbeiten, kann es zu Problemen hinsichtlich eines Verschleißes von Lagerflächen kommen. Durch die beidseitige Anlage des Absatzes der Dämpfernabe und z. B. des Axiallagerblechs an der Dämpferscheibe ist insbesondere ein Reibkontakt der Radiallagerflächen zwischen der Dämpferscheibe und der Dämpfernabe vergleichsweise stark zum Schmierstoff hin gedichtet. Somit kann kein oder lediglich wenig Schmierstoff in diesen Reibkontakt gelangen, wodurch es zu einem erhöhtem Reibverschleiß an den beteiligten Radiallagerflächen kommt. Ferner besteht ein ähnliches Problem an einem Reibkontakt der Axiallagerfläche des Absatzes der Dämpfernabe und dem inneren Durchmesserabschnitt der Dämpferscheibe. Ähnliche Probleme können an Bauteilen für einen Zweimassenwandler, eine Kupplung, eine Welle etc. auftreten.

Es ist eine Aufgabe der Erfindung, ein verbessertes Nassraum-Rotationsbauteil, bevorzugt ein verbessertes Dämpferrotationsbauteil, sowie eine verbesserte Nassraum-Baugruppe, bevorzugt eine verbesserte Dämpfer-Baugruppe eines Torsionsschwingungsdämpfers z. B. für einen Wandler eines Fahrzeugs, insbesondere eines Personenkraftwagens, zur Verfügung zu stellen. Ferner ist es eine Aufgabe der Erfindung, eine verbesserte Drehmomentübertragungseinrichtung, insbesondere ein verbessertes Getriebe, einen verbesserten Wandler oder einen verbesserten Torsionsschwingungsdämpfer für ein Fahrzeug, wie einen Personenkraftwagen, einen Personentransportwagen, ein Nutzfahrzeug oder eine Baumaschine, anzugeben.

Durch das erfindungsgemäße Nassraum-Rotationsbauteil bzw. die erfindungsgemäße Nassraum-Baugruppe soll ein Reibverschleiß an einer Lagerfläche des Nassraum-Rotationsbauteils bzw. in einem Kontaktbereich zwischen einem Nassraum-Rotationsbauteil und einem zweiten Nassraum-Rotationsbauteil, also den beteiligten Lagerflächen der beiden Nassraum-Rotationsbauteile, verringert sein. Ferner soll der sicher betreibbare Torsionsschwingungsdämpfer einen geringen axialen und/oder radialen Bauraumverbrauch, z. B. im Wandler, bei einer effizienten Leistungsübertragung besitzen. Er soll zudem einen konstruktiv einfachen und kompakten sowie einen einfach zu montierenden Aufbau besitzen und des Weiteren kostengünstig in seiner Herstellung, seiner Montage, seinem Betrieb und/oder seiner Wartung sein.

Die Aufgabe der Erfindung ist mittels eine Nassraum-Rotationsbauteils, bevorzugt eines Dämpferrotationsbauteils eines Torsionsschwingungsdämpfers für einen Wandler eines Fahrzeugs, insbesondere eines Personenkraftwagens, gemäß Anspruch 1; mittels einer Nassraum-Baugruppe, bevorzugt einer Dämpfer-Baugruppe eines Torsionsschwingungsdämpfers für einen Wandler eines Fahrzeugs, insbesondere eines Personenkraftwagens, gemäß Anspruch 2; und mittels einer Drehmomentübertragungseinrichtung, insbesondere einem Getriebe, einem Wandler oder einem Torsionsschwingungsdämpfer für ein Fahrzeug, wie einen Personenkraftwagen, ein Personentransportwagen, ein Nutzfahrzeug oder eine Baumaschine, gemäß Anspruch 12 gelöst. - Vorteilhafte Weiterbildungen, zusätzliche Merkmale und/oder Vorteile der Erfindung ergeben sich aus den abhängigen Ansprüchen und/oder der folgenden Beschreibung.

Das erfindungsgemäße Nassraum-Rotationsbauteil umfasst eine in eine Umfangsrichtung des Nassraum-Rotationsbauteils umlaufende Lagerfläche zum radialen und/oder axialen Lagern des Nassraum-Rotationsbauteils auf/an einem zweiten Nassraum-Rotationsbauteil. Das Nassraum-Rotationsbauteil weist dabei wenigstens einen darin/daran vorgesehenen Schmierstoffkanal für einen Transport eines Schmierstoffs zur Lagerfläche auf, wobei der Schmierstoffkanal insbesondere direkt an einer bevorzugt einzigen, ausgewählten Stelle vorzugsweise unmittelbar an/in der Lagerfläche mündet. - Die umlaufende Lagerfläche des Nassraum-Rotationsbauteils kann eine Lagerfläche für ein Radial- und/oder ein Axiallager sein. Dementsprechend ist die Lagerfläche in erster Näherung im Wesentlichen ein innerer "Kreiszylinder" (Innendurchmesser, Radiallagerfläche) und/oder im Wesentlichen ein äußerer "Kreisring" (innerer Durchmesserabschnitt, Axiallagerfläche).

Die erfindungsgemäße Nassraum-Baugruppe weist ein Nassraum-Rotationsbauteil und ein zweites Nassraum-Rotationsbauteil auf, wobei zwischen den beiden Nassraum-Rotationsbauteilen eine sich in eine Umfangsrichtung der Nassraum-Baugruppe erstreckende Lagerung ausgebildet ist. Die Nassraum-Baugruppe weist dabei wenigstens einen Schmierstoffkanal auf, durch welchen hindurch ein Schmierstoff selektiv, d. h. an einer ausgewählten Stelle, und bevorzugt direkt an/in die Lagerung transportierbar ist. - Die Lagerung zwischen den beiden Nassraum-Rotationsbauteilen ist analog zu oben eine Radiallagerung und/oder eine Axiallagerlagerung, wofür die beiden Nassraum-Rotationsbauteile zueinander korrespondierende Lagerflächen besitzen, welche in erster Näherung analog zu oben im Wesentlichen ein innerer und ein äußerer "Kreiszylinder" (Innen-/Außendurchmesser, Radiallagerung) bzw. im Wesentlichen zwei äußere "Kreisringe" (innerer/ äußerer Durchmesserabschnitt, Axiallagerung) sind.

Die erfindungsgemäße Nassraum-Baugruppe kann ein erfindungsgemäßes Nassraum-Rotationsbauteil aufweisen. Ferner weist die erfindungsgemäße Drehmomentübertragungseinrichtung ein erfindungsgemäßes Nassraum-Rotationsbauteil und/oder eine erfindungsgemäße Nassraum-Baugruppe auf. - Die nachfolgenden Ausführungen können auf die oben genannte Radiallagerung und/oder die oben genannte Axiallagerung bezogen werden. Ferner beziehen sich die nachfolgenden Ausführungen als (erstes) Nassraum-Rotationsbauteil bevorzugt auf ein Dämpferrotationsbauteil wie ein Dämpfereingangsteil, ein Dämpferausgangsteil, eine Gegenscheibe, eine Mitnehmerscheibe oder einen Pendelflansch eines Dämpfers; ein Kupplungsrotationsbauteil wie einen Lamellenträger einer Kupplung oder eine Schwungmasse eines Zweimassenwandlers; sowie als zweites Nassraum-Rotationsbauteil auf ein Dämpferrotationsbauteil wie eine Nabe des Dämpfers oder ein Kupplungsrotationsbauteil wie eine Nabe der Kupplung. Dies kann auch kinematisch umgekehrt sein.

Die Lagerfläche zum radialen/axialen Lagern des (ersten) Nassraum-Rotationsbauteils auf/an dem zweiten Nassraum-Rotationsbauteil ist bevorzugt als eine Gleitlagerfläche ausgebildet, wobei die Lagerfläche, abgesehen von einer Öffnung oder Öffnungen des Schmierstoffkanals bzw. einer Mehrzahl von Schmierstoffkanälen an/in der Lagerfläche, im Umfangsrichtung bevorzugt vollständig geschlossen ist, d. h. im Wesentlichen zylinder- bzw. kreisringförmig ausgebildet ist. Hierbei kann eine Lagerfläche, bevorzugt eine Gleitlagerfläche, des zweiten Nassraum-Rotationsbauteils vollständig geschlossen sein, d. h. im Wesentlichen zylinder- bzw. kreisringförmig ausgebildet sein. - Die Erfindung ist natürlich auf beide Nassraum-Rotationsbauteile zugleich anwendbar, wobei dann beide Lagerflächen durch einen Rand oder eine Kante (siehe unten) wenigstens einer Öffnung wenigstens eines Schmierstoffkanals begrenzt und/oder unterbrochen sein können.

In einem Betrieb eines mit dem erfindungsgemäßen (ersten) Nassraum-Rotationsbauteil bzw. mit der erfindungsgemäßen Nassraum-Baugruppe ausgestatteten Dämpfers, insbesondere eines Dreh- bzw. Torsionsschwingungsdämpfers z. B. für eine Turbine eines hydrodynamischen Drehmomentwandlers, ist durch den Schmierstoffkanal ein Schmierstoff, insbesondere ein Schmieröl, an die Lagerfläche des (ersten) Nassraum-Rotationsbauteils und somit auch an die Lagerflächen und an/in eine Lagerung, bevorzugt eine Gleitlagerung, des (ersten) Nassraum-Rotationsbauteils auf/an dem zweiten Nassraum-Rotationsbauteil hin transportierbar, bzw. vice versa. Dies ist z. B. auch auf Kupplungen, Zweimassenwandler etc. anwendbar. - Das (erste) Nassraum-Rotationsbauteil kann ferner als ein Kupplungsrotationsbauteil, eine Nabe etc. ausgebildet sein. Ferner kann die Nassraum-Baugruppe als eine Kupplungs-Baugruppe, eine Naben-Baugruppe etc. ausgebildet sein.

Gemäß der Erfindung können die Lagerfläche und der Schmierstoffkanal des Nassraum-Rotationsbauteils bzw. der Nassraum-Baugruppe eine gemeinsame Kante oder einen gemeinsamen Rand besitzen. Die gemeinsame Kante oder der gemeinsame Rand kann eine Begrenzung einer Öffnung des Schmierstoffkanals in/an der Lagerfläche sein. Die Öffnung, die Kante und/oder der Rand können dabei eine Begrenzung oder eine Unterbrechung der Lagerfläche bilden. Unter einer Unterbrechung kann eine vollständige Unterbrechung (Durchtrennung) der betreffenden Lagerfläche in axialer bzw. radialer Richtung verstanden werden. In Ausführungsformen der Erfindung kann der Schmierstoffkanal des Nassraum-Rotationsbauteils bzw. der Nassraum-Baugruppe mit der Lagerfläche verschnitten sein.

Hierbei kann der Schmierstoffkanal eine Ausnehmung, eine Durchgangsausnehmung, eine Längsausnehmung, eine Vertiefung, eine Prägung, eine Nut, eine Bohrung, einen Kanal und/oder eine Passage im Nassraum-Rotationsbauteil bzw. in der Nassraum-Baugruppe aufweisen. Ferner kann der Schmierstoffkanal wenigstens abschnittsweise von einer Schmierstoffpassage in der Nassraum-Baugruppe gebildet sein, welche zwischen zwei oder mehr Bauteilen der Nassraum-Baugruppe ausgebildet ist. Gemäß der Erfindung können zwei, drei, vier, fünf, sechs, sieben, acht, neun, zehn, elf, zwölf, dreizehn, vierzehn oder mehr Schmierstoffkanäle im Nassraum-Rotationsbauteil oder der Nassraum-Baugruppe vorgesehen bzw. ausgebildet sein.

Ein Schmierstoffkanal kann natürlich eine Kombination der oben genannten Merkmale umfassen. Ferner kann ein Schmierstoffkanal eine Mehrzahl eines der oben genannten Merkmale und/oder eine Mehrzahl wenigstens zweier der oben genannten Merkmale aufweisen. - Eine Ausbildung bzw. ein Verlauf des Schmierstoffkanals ist prinzipiell beliebig, wobei eine Form und ein Verlauf bevorzugt sind, mittels welcher bzw. durch welchen bei den ggf. drehzahlabhängigen Strömungsverhältnissen ein wenigstens ausreichender Transport von Schmierstoff an die Lagerfläche des (ersten) Nassraum-Rotationsbauteils und somit auch an die Lagerflächen und an/in die Lagerung in der Nassraum-Baugruppe gewährleitet ist. Bevorzugt ist ein möglichst direkter geradliniger und/oder bogenförmiger Verlauf des Schmierstoffkanals ohne einen wesentlichen Engpass und/oder ohne eine wesentliche Unstetigkeitsstelle.

Ein Querschnitt bzw. ein Querschnittsverlauf des Schmierstoffkanals ist ebenfalls prinzipiell beliebig, wobei wiederum eine Form bevorzugt ist, welche einen wenigstens ausreichenden Transport von Schmierstoff ermöglicht. Bevorzugt ist ein möglichst großer Querschnitt, welcher einen vergleichsweise hohen Volumenstrom an Schmierstoff garantieren kann, ohne dabei eine Funktion des (ersten) Nassraum-Rotationsbauteils und/oder der Nassraum-Baugruppe zu beeinträchtigen. Eine Querschnittsfläche des Schmierstoffkanals soll dabei in Bezug auf ihren Umfang möglichst groß sein, wobei sich der Querschnitt bzw. ein Abschnitt oder eine Mehrzahl von Abschnitten davon einer Quadrat- und idealerweise einer Kreisform nähert. Beliebig zusammengesetzte Querschnitte sind natürlich anwendbar. Hierbei kann der Querschnitt bzw. der Querschnittsverlauf abschnittsweise geschlossen oder auch offen sein.

Bei dem Nassraum-Rotationsbauteil oder bei der Nassraum-Baugruppe kann der Schmierstoffkanal im Wesentlichen radial und/oder axial eingerichtet bzw. sich im Wesentlichen axial und/oder radial erstrecken, wobei der Schmierstoff bevorzugt von einer axialen Seite, von beiden axialen Seiten, von radial innen und/oder von radial außen an die Lagerfläche des Nassraum-Rotationsbauteils bzw. an/in die Lagerung transportierbar ist. Eine Erstreckung des Schmierstoffkanals oder eines Abschnitts bzw. einer Mehrzahl von Abschnitten des Schmierstoffkanals ist natürlich immer dreidimensional, d. h. der Schmierstoffkanal bzw. ein Abschnitt davon erstreckt sich immer in Axial-, Radial- und Umfangsrichtung. Eine oben angegebene Richtung ist lediglich eine Hauptrichtung einer Erstreckung des Schmierstoffkanals, d. h. diejenige Richtung, in welcher der Schmierstoff hauptsächlich zur Lagerfläche, zu den Lagerflächen bzw. zur Lagerung transportierbar ist bzw. im Betrieb transportierbar ist.

Die Nassraum-Baugruppe kann für ihren Betrieb derart ausgebildet sein, dass für eine Mehrzahl/Vielzahl von Schmierstoffkanälen und eine Vielzahl/Mehrzahl von Zuflüssen für die Schmierstoffkanäle eine (Umfangs-)Teilung der Schmierstoffkanäle und eine (Umfangs-)Teilung der Zuflüsse (Zuflussöffnungen) für die Schmierstoffkanäle in Abhängigkeit einer gegenseitigen Verdrehbarkeit betreffender Rotationsbauteile gewählt ist. Hierbei ist es bevorzugt, dass im Wesentlichen in einer jeden Verdrehlage der betreffenden Rotationsbauteile zueinander, wenigstens ein Schmierstoffkanal durch einen Zufluss (Zuflussöffnung) hindurch mit Schmierstoff versorgbar ist. Ein Zufluss mit einer Zuflussöffnung zu einem Schmierstoffkanal kann analog zum Schmierstoffkanal eine Ausnehmung, eine Durchgangsausnehmung, eine Längsausnehmung, eine Vertiefung, eine Prägung, eine Nut, eine Bohrung, ein Kanal und/oder eine Passage sein, wobei die jeweilige Zuflussöffnung ein betreffender Eintrittsquerschnitt des Zuflusses für den Schmierstoff ist.

D. h. die Nassraum-Baugruppe kann derart ausgebildet sein, dass im Betrieb des Dämpfers ein einzelner Schmierstoffkanal von einer Mehrzahl von Zuflüssen abwechselnd von einem der Mehrzahl dieser, insbesondere zwei, drei oder vier, Zuflüsse mit Schmierstoff versorgbar ist. Dies kann auch umgekehrt ausgeführt sein. Es ist bevorzugt, dass immer wenigstens ein Schmierstoffkanal über einen Zufluss mit Schmierstoff versorgbar ist. Somit ist immer ein offener Kanal bzw. eine offene Passage an die Lagerfläche, an die Lagerflächen bzw. an/in die Lagerung vorhanden. Im Betrieb ist dann wenigstens zeitweise ein Zufluss zu einem Schmierstoffkanal ein Abschnitt des betreffenden Schmierstoffkanals bzw. ein bestimmter Zufluss ist lediglich zeitweise ein Abschnitt des Schmierstoffkanals. - Die Nassraum-Baugruppe kann natürlich auch derart ausgebildet sein, dass im Betrieb ein einzelner Schmierstoffkanal von einem einzigen Zufluss an- und abschaltend, aber bevorzugt im Wesentlichen permanent, versorgbar ist.

In Ausführungsformen der Erfindung kann das Nassraum-Rotationsbauteil eine gerade oder ungerade Anzahl von Abschnitten für Schmierstoffkanäle aufweisen, bzw. ein zweites Rotationsbauteil kann eine ungerade oder gerade Anzahl von Abschnitten für Schmierstoffkanäle besitzen. Das Nassraum-Rotationsbauteil kann zwei, drei, vier, fünf, sechs, sieben, acht, neun, zehn oder mehr Abschnitte von Schmierstoffkanälen aufweisen. Hierbei kann ein zweites Rotationsbauteil vier, fünf, sechs, sieben, acht, neun, zehn, elf, zwölf, dreizehn, vierzehn oder mehr Abschnitte für bzw. Zuflüsse zu Schmierstoffkanälen besitzen. Eine Fläche der Öffnungen in der Lagerfläche kann ca. 17%, ca. 22%, ca. 27%, ca. 32%, ca. 37%, ca. 42%, ca. 47% oder ca. 52% einer Fläche der (verbleibenden) Lagerfläche oder einer Fläche einer in Umfangsrichtung vollständig geschlossenen, idealen Lagerfläche betragen.

Die Nassraum-Baugruppe kann derart ausgebildet sein, dass der Schmierstoffkanal von wenigstens einem Dämpferrotationsbauteil und/oder einem Lager begrenzt ist. Hierbei kann das Dämpferrotationsbauteil ein Dämpfereingangsteil, ein Pendelflansch, eine Nabe, eine Turbine und/oder ein Nabenflansch, und/oder das Lager ein Axiallager sein. Ferner kann die Nassraum-Baugruppe derart ausgebildet sein, dass der Schmierstoffkanal von einer Nabe und wenigstens einem Dämpferrotationsbauteil und/oder einem Lagerteil begrenzt ist, wobei das Dämpferrotationsbauteil ein Dämpfereingangsteil, ein Pendelflansch, eine Turbine und/oder ein Nabenflansch, und/oder das Lagerteil ein Axiallagerteil sein kann. Des Weiteren kann die Nassraum-Baugruppe derart ausgebildet sein, dass ein Zufluss zum Schmierstoffkanal oder der Schmierstoffkanal von zwei Dämpferrotationsbauteilen, oder einem Dämpferrotationsbauteil und einem Lagerteil begrenzt ist, wobei die zwei Dämpferrotationsbauteile eine Turbine und ein Nabenflansch, bzw. das Dämpferrotationsbauteil ein Dämpfereingangsteil oder ein Pendelflansch, und das Lagerteil ein Axiallagerteil sein können.

Gemäß der Erfindung kann zwischen dem Nassraum-Rotationsbauteil und dem zweiten Nassraum-Rotationsbauteil eine zweite sich in die Umfangsrichtung erstreckende Lagerung ausgebildet sein, wobei die Nassraum-Baugruppe wenigstens einen Schmierstoffkanal aufweist, durch welchen hindurch der Schmierstoff selektiv, d. h. wiederum an einer ausgewählten Stelle, und wiederum direkt an/in die Lagerung transportierbar ist. Ein solcher Schmierstoffkanal kann ein Abschnitt eines oben näher beschriebenen Schmierstoffkanals sein, oder ein solcher Schmierstoffkanal kann zusätzlich oder alternativ zu einem oben näher beschriebenen Schmierstoffkanal vorgesehen sein. Bei diesen Ausführungsformen kann ein solcher Schmierstoffkanal in einer analogen oder univoken Weise wie ein oben näher beschriebener Schmierstoffkanal ausgebildet sein.

Die Erfindung ist im Folgenden anhand von Ausführungsbeispielen unter Bezugnahme auf die beigefügte detaillierte Zeichnung näher erläutert. Elemente oder Bauteile, welche eine identische, univoke oder analoge Ausbildung und/oder Funktion besitzen, sind in der Beschreibung und der Bezugszeichenliste mit denselben Bezugszeichen versehen und/oder in den Figuren der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu den dargestellten und/oder erläuterten Ausführungsformen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar, ohne den Rahmen der Erfindung zu verlassen. Insbesondere ist es möglich, anhand der Bezugszeichen und den diesen zugeordneten Merkmalen in der Bezugszeichenliste ein Merkmal oder eine Mehrzahl von Merkmalen in der Beschreibung der Erfindung und/oder der Figurenbeschreibung zu substituieren. Ferner kann dadurch ein Merkmal oder eine Mehrzahl von Merkmalen in den Ansprüchen ausgelegt und/oder näher spezifiziert werden. - In den Figuren (Fig.) der Zeichnung zeigen:
- Fig. 1: in einer weggebrochenen und geschnittenen Perspektivansicht eine erste Ausführungsform einer Nassraum-Baugruppe mit einer ersten Ausführungsform eines Schmierstoffkanals in einem Nassraum-Rotationsbauteil bzw. der Nassraum-Baugruppe;
- Fig. 2: in einer zur Fig. 1 analogen Schnittansicht eine zweite Ausführungsform der Nassraum-Baugruppe mit einer zweiten Ausführungsform des Schmierstoffkanals in dem Nassraum-Rotationsbauteil bzw. der Nassraum-Baugruppe;
- Fig. 3: wiederum in einer zur Fig. 1 analogen Schnittansicht eine dritte Ausführungsform der Erfindung als eine Kombination der Ausführungsform der Fig. 1 mit der Ausführungsform der Fig. 2;
- Fig. 4: eine allseitig weggebrochene axiale Draufsicht auf die Nassraum-Baugruppe aus den Fig. 3 mit durchscheinenden Querschnitten der Schmierstoffkanäle im Nassraum-Rotationsbauteil;
- Fig. 5: in einer weggebrochenen und geschnittenen Perspektivansicht eine vierte Ausführungsform der Nassraum-Baugruppe mit einer vierten Ausführungsform des Schmierstoffkanals in dem Nassraum-Rotationsbauteil bzw. der Nassraum-Baugruppe;
- Fig. 6: in einer zur Fig. 5 analogen Schnittansicht eine fünfte Ausführungsform der Nassraum-Baugruppe mit einer fünften Ausführungsform des Schmierstoffkanals in einem zweiten Nassraum-Rotationsbauteil bzw. der Nassraum-Baugruppe;
- Fig. 7: eine dreidimensionale Ansicht auf das zweite Nassraum-Rotationsbauteil aus der Fig. 6, wobei das zweite Nassraum-Rotationsbauteil als eine Nabe mit einem Bereich des Schmierstoffkanals ausgebildet ist;
- Fig. 8: in einer weggebrochenen und geschnittenen Perspektivansicht eine sechste Ausführungsform der Nassraum-Baugruppe mit einer sechsten Ausführungsform des Schmierstoffkanals in der Nassraum-Baugruppe;
- Fig. 9: eine dreidimensionale Ansicht auf ein zweites Nassraum-Rotationsbauteil aus der Fig. 8, wobei das zweite Nassraum-Rotationsbauteil als eine Nabe mit einem Bereich des Schmierstoffkanals ausgebildet ist;
- Fig. 10: in einer weggebrochenen und geschnittenen Perspektivansicht eine siebte Ausführungsform der Nassraum-Baugruppe mit einer achten Ausführungsform des Schmierstoffkanals in einem zweiten Nassraum-Rotationsbauteil; und
- Fig. 11: eine dreidimensionale Ansicht auf das zweite Nassraum-Rotationsbauteil aus der Fig. 10, wobei das zweite Nassraum-Rotationsbauteil als eine Nabe mit dem Schmierstoffkanal ausgebildet ist;

Die Erläuterung der Erfindung bezieht sich im Folgenden auf eine Axialrichtung Ax, eine Rotationsachse Ax, eine Radialrichtung Ra und eine Umfangsrichtung Um einer erfindungsgemäßen Drehmomentübertragungseinrichtung 0 mit einer erfindungsgemäßen Dämpfereinrichtung 1, eines Antriebsstrangs eines Fahrzeugs, insbesondere eines Kraftfahrzeugs, wie z. B. eines Personenkraftwagens, eines Personentransportwagens, eines Nutzfahrzeugs oder einer Baumaschine mit Benzin- oder Dieselmotor. Diese Lageangaben beziehen sich z. B. auch auf eine Kurbelwelle des Fahrzeugs, den Antriebsstrang, ein (Automatik-)Getriebe 0, einen Wandler 0, die Dämpfereinrichtung 1, eine erfindungsgemäße Nassraum-Baugruppe 2, ein erfindungsgemäßes Nassraum-Rotationsbauteil 10/20 etc. - Gemäß der Erfindung ist das Nassraum-Rotationsbauteil 10/20 bzw. die Nassraum-Baugruppe 2 ein Teil der Dämpfereinrichtung 1 und somit der Drehmomentübertragungseinrichtung 0.

Die jeweils lediglich teilweise in der Zeichnung dargestellte Drehmomentübertragungseinrichtung 0 kann als ein (Automatik-)Getriebe 0, ein Wandler 0, ein (hydrodynamischer) Drehmomentwandler 0, ein Dämpfer 0, eine (Mehrfach-)Kupplung, eine Kupplungsbaugruppe, ein Zweimassenwandler, ggf. mit einem (Trapez-)Fliehkraftpendel etc., eine Baugruppe oder eine Kombination davon, mit einer erfindungsgemäßen Dämpfereinrichtung 1 ausgebildet sein. Die Dämpfereinrichtung 1 ist bevorzugt als ein Torsionsschwingungsdämpfer 1 ausgebildet, der vorliegend als ein Turbinendämpfer 1 eingesetzt ist. Andere Einsatzgebiete sind natürlich anwendbar. Die Erfindung ist ferner auf eine Dämpfereinrichtung 1 beziehbar, die z. B. eine als Nassraum-Baugruppe 2 ausgebildete Dämpfer-Baugruppe 2 aufweist. Darüber hinaus kann die Erfindung analog auch auf eine Kupplungs-Baugruppe, eine Naben-Baugruppe, eine Zweimassenwandler-Baugruppe etc. angewendet werden.

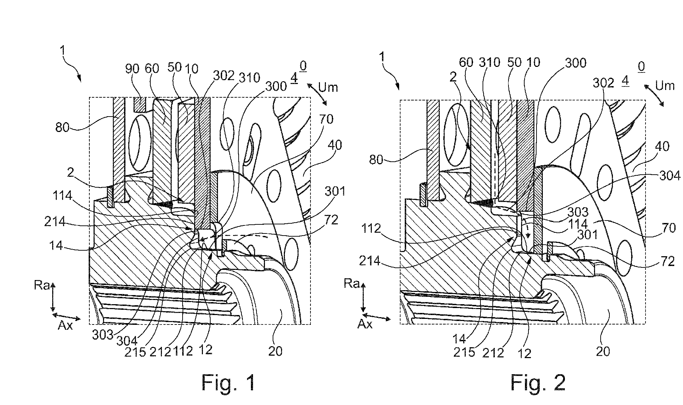

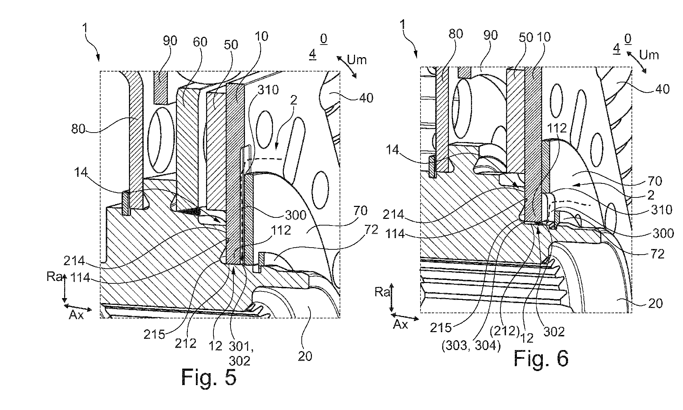

Im Rahmen der Zeichnung umfasst die Erfindung lediglich das erfindungsgemäße Nassraum-Rotationsbauteil 10/20 bzw. die erfindungsgemäße Nassraum-Baugruppe 2 mit einem ggf. erfindungsgemäßen Nassraum-Rotationsbauteil 10/20 und einem zweiten Nassraum-Rotationsbauteil 20/10 sowie ggf. ein weiteres oder eine Mehrzahl weiterer Bauteile 40, 50, 60, 70, 72, 80, 90. Das zweite Nassraum-Rotationsbauteil 20/10 ist in einem betreffenden Abschnitt bzw. Bereich zum ersten Nassraum-Rotationsbauteil 10/ 20 in einer ersten Näherung komplementär bzw. korrespondierend ausgebildet. - Zunächst soll im Rahmen der Erfindung das erfindungsgemäße Nassraum-Rotationsbauteil 10/20, bevorzugt anhand der Fig. 1, 2, 5 bis 7, 10 und 11 näher erläutert werden. Das Nassraum-Rotationsbauteil 10/20 ist dabei als ein Dämpferrotationsbauteil 10/20 und gemäß den Fig. 1, 2 und 5 bevorzugt als eine Dämpferscheibe 10, insbesondere ein Pendelflansch 10, und gemäß den Fig. 6, 7, 10 und 11 bevorzugt als eine Nabe 20, insbesondere eine Dämpfernabe 20 bzw. eine Lagerscheibe 20 ausgebildet.

Die Dämpferscheibe 10 weist radial innen und sich in Axial- Ax und Umfangsrichtung Um erstreckend eine Gleitlagerfläche 112 auf, mittels welcher die Dämpferscheibe 10 radial auf der Dämpfernabe 20 lagerbar ist. In erster Näherung ist diese Gleitlagerfläche 112 eine geschlossene, ununterbrochene, radial innere Zylinderfläche. - Ferner kann die Dämpferscheibe 10 an einem axial äußeren Radialinnenabschnitt (innerer Durchmesserabschnitt) eine sich in Radial- Ra und Umfangsrichtung Um erstreckende Gleitlagerfläche 114 aufweisen, mittels welcher die Dämpferscheibe 10 axial einseitig an der Dämpfernabe 20 (Gleitlagerfläche 214) lagerbar ist. In erster Näherung ist diese Gleitlagerfläche 114 eine geschlossene, ununterbrochene Kreisringfläche, die sich axial außen in Radialrichtung Ra von innen nach außen wegerstreckt. - Hierbei besitzen die Gleitlagerfläche 112 und die Gleitlagerfläche 114 (soweit vorhanden) bevorzugt eine gemeinsame Kante oder einen gemeinsamen Rand (Kreis oder projizierter Kreisring in Umfangsrichtung Um mit einem Punkt der Rotationsachse Ax als Zentrum) und sind im Wesentlichen in einem rechten Winkel zueinander angeordnet.

Die Dämpfernabe 20 weist radial außen und sich in Axial- Ax und Umfangsrichtung Um erstreckend eine Gleitlagerfläche 212 auf, auf welcher die Dämpferscheibe 10 radial lagerbar ist. In erster Näherung ist diese Gleitlagerfläche 212 eine geschlossene, ununterbrochene, radial äußere Zylinderfläche. - Ferner kann die Dämpfernabe 20 an einem axial inneren Radialaußenabschnitt (Axiallagerfläche Absatz) eine sich in Radial- Ra und Umfangsrichtung Um erstreckende Gleitlagerfläche 214 aufweisen, an welcher die Dämpferscheibe 10 (Gleitlagerfläche 114) axial lagerbar ist. In erster Näherung ist diese Gleitlagerfläche 214 eine geschlossene, ununterbrochene Kreisringfläche, die sich axial innen in Radialrichtung Ra von außen nach innen erstreckt. - Hierbei besitzen die Gleitlagerfläche 212 und die Gleitlagerfläche 214 (soweit vorhanden) bevorzugt einen gemeinsamen Rand oder eine gemeinsame Kante (projizierter Kreisring oder Kreis in Umfangsrichtung Um mit einem Punkt der Rotationsachse Ax als Zentrum) und sind im Wesentlichen in einem rechten Winkel zueinander angeordnet. Zwischen den beiden Gleitlagerflächen 212, 214 befindet sich bevorzugt ein in Umfangsrichtung Um verlaufender Freischnitt 215.

Ist die Dämpferscheibe 10 auf der Dämpfernabe 20 zentriert montiert (siehe auch unten) so bildet sich aufgrund der Gleitlagerflächen 112,212 wenigstens eine als Radiallagerung 12 ausgebildete Gleitlagerung 12 zwischen der Dämpferscheibe 10 und der Dämpfernabe 20 aus. Sind ferner die Gleitlagerflächen 114, 214 vorhanden, so bildet sich darüber hinaus eine als Axiallagerung 14 ausgebildete Gleitlagerung 14 zwischen der Dämpferscheibe 10 und der Dämpfernabe 20 aus. - Es ist gemäß der Erfindung möglich, die Gleitlagerung 14 anderweitig auszubilden oder zu substituieren, was z. B. mittels der Gleitlagerfläche 114 und eines Rings oder einer weiteren (Dämpfer-)Scheibe, mittels eines Wälzlagers, z. B. eines Axial- oder eines Radial-/Axiallagers, oder anderweitig realisiert sein kann.

Gemäß der Erfindung kann die Dämpferscheibe 10 einen Schmierstoffkanal 300 für einen Transport (Hin- und/oder Abtransport) eines Schmierstoffs zur bzw. von der (Radial-)Lagerfläche 112 und/oder zur bzw. von der (Axial-)Lagerfläche 114 aufweisen. Im montierten Zustand der Dämpferscheibe 10 auf der Dämpfernabe 20 kann der betreffende Schmierstoffkanal 300 der Dämpferscheibe 10 den Schmierstoff auch zur bzw. von der Lagerfläche 212 und/oder zur bzw. von der Lagerfläche 214 der Dämpfernabe 20 und somit an/in die bzw. aus der Lagerung 12 und/oder an/in bzw. aus der Lagerung 14 hin- und/oder abtransportieren. - Bevorzugt ist der Schmierstoffkanal 300 der Dämpferscheibe 10 z. B.: eine Ausnehmung (vgl. Fig. 1, 2 und 5), insbesondere eine Durchgangsausnehmung (vgl. Fig. 1 und 2), eine Längsausnehmung (vgl. Fig. 5), eine Vertiefung (vgl. Fig. 5), eine Prägung (vgl. Fig. 5), eine Nut (vgl. Fig. 5) und/oder eine Bohrung (in den betreffenden Fig. nicht dargestellt).

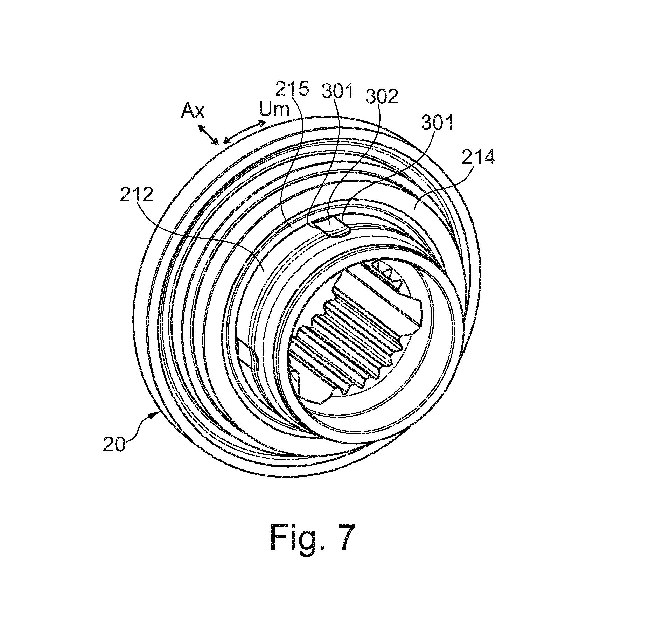

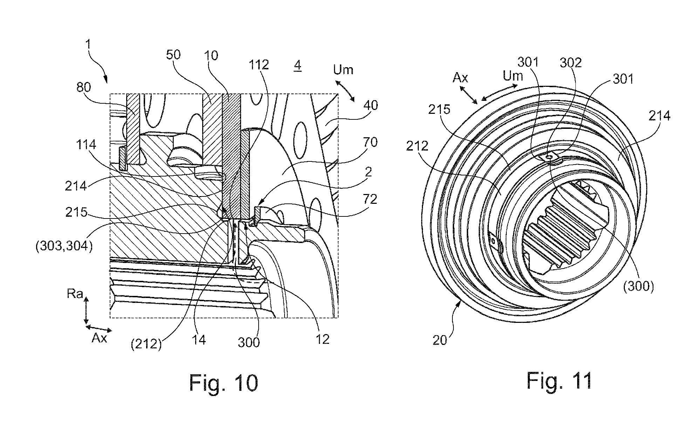

Gemäß der Erfindung kann die Dämpfernabe 20 einen Schmierstoffkanal 300 für einen Transport (Hin- und/oder Abtransport) des Schmierstoffs zur bzw. von der (Radial-)Lagerfläche 212 und/oder zur bzw. von der (Axial-)Lagerfläche 214 aufweisen. Im montierten Zustand der Dämpferscheibe 10 auf der Dämpfernabe 20 kann der betreffende Schmierstoffkanal 300 der Dämpfernabe 20 den Schmierstoff auch zur bzw. von der Lagerfläche 112 und/oder zur bzw. von der Lagerfläche 114 der Dämpferscheibe 10 und somit an/in die bzw. aus der Lagerung 12 und/oder an/in die bzw. aus der Lagerung 14 hin- und/oder abtransportieren. - Bevorzugt ist der Schmierstoffkanal 300 der Dämpfernabe 20 z. B.: eine Ausnehmung (vgl. Fig. 6 und 7), eine Vertiefung (vgl. Fig. 6 und 7), eine Prägung (vgl. Fig. 6 und 7), eine Nut (vgl. Fig. 6 und 7) und/oder eine Bohrung plus bevorzugt eine die Bohrung öffnende Ausnehmung (vgl. Fig. 10 und 11). - Im montierten Zustand der Dämpferscheibe 10 auf der Dämpfernabe 20 können die oben genannten Schmierstoffkanäle 300 einzeln oder in Kombination angewendet sein.

Im Folgenden ist nur noch von einem Transport von Schmierstoff die Rede, für einen Hin-/Abtransport gilt das Gesagte in analoger Form. - Gemäß der Erfindung ist der Schmierstoffkanal 300 derart in der Dämpferscheibe 10 und/oder in der Dämpfernabe 20 eingerichtet, dass ein Querschnitt oder ein Ende des Schmierstoffkanals 300 wenigstens teilweise mit der betreffenden Lagerfläche 112, 114; 212, 214 verschnitten ist. D. h. die betreffende Lagerfläche 112, 114; 212, 214 besitzt mit dem Schmierstoffkanal 300 eine gemeinsame Kante 301, 303 und/oder einen gemeinsamen Rand 301, 303 in einem Bereich einer Öffnung 302, 304 des Schmierstoffkanals 300 an/in der betreffenden Lagerfläche 112, 114; 212, 214. Hierbei begrenzt der Querschnitt des Schmierstoffkanals 300 die betreffende Lagerfläche 112, 114; 212, 214 derart, dass er die betreffende Lagerfläche 112, 114; 212, 214 unterbricht (vgl. Fig. 1 bis 3 und 6 bis 11). Es ist natürlich dadurch möglich, die betreffende Lagerfläche 112, 114; 212, 214 nur teilweise zu unterbrechen, was durch eine Begrenzung der Lagerfläche 112 durch die Öffnung 302 des Schmierstoffkanals 300 in der Fig. 5 dargestellt ist.

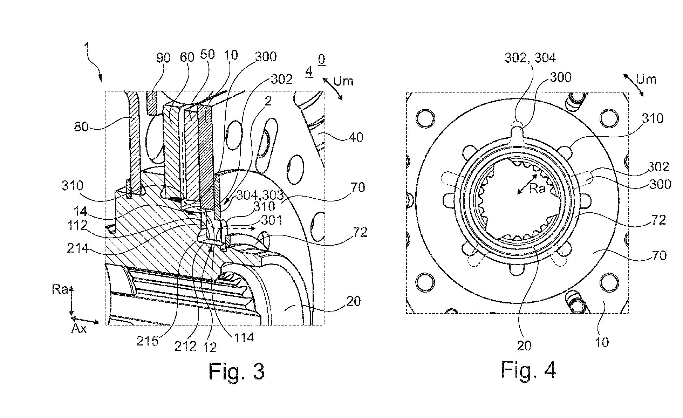

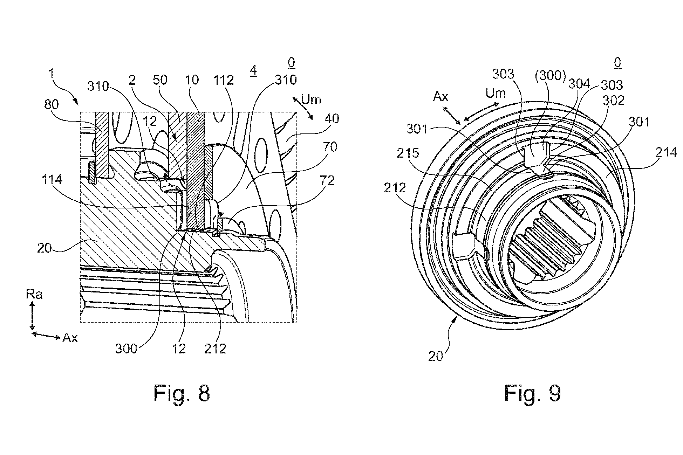

Hierbei ist es bevorzugt, dass der Schmierstoffkanal 300 an/in der betreffenden Lagerfläche 112, 114; 212, 214 mündet bzw. endet (vgl. die Fig. 1, 2, 5, 6 und 10). Es ist natürlich möglich (vgl. die Fig. 3 und 8), den Schmierstoffkanal 300 die Gleitlagerung 12, 14 passieren zu lassen, wobei dann eine gegenüber einer Öffnung 302, 304 liegende Lagerfläche 212, 214; 112, 114 eine Seitenwand des Schmierstoffkanals 300 bildet. D. h. die betreffende Lagerfläche 212, 214; 112, 114 ist ein Bereich des Schmierstoffkanals 300, natürlich abgesehen von einem Lagerspalt der betreffenden Gleitlagerung 12, 14. - Durch die Öffnung 302, 304 an/in der Lagerfläche 112, 114; 212, 214 des Schmierstoffkanals 300 bzw. an/in der Gleitlagerung 12, 14, ist der Schmierstoff an/in den Lagerspalt der Gleitlagerung 12, 14 transportierbar. Bevorzugt ist die betreffende Lagerfläche 112, 114; 212, 214 abgesehen von der Öffnung 302, 304 oder den Öffnungen 302, 304 des Schmierstoffkanals 300 bzw. der Schmierstoffkanäle 300 in Umfangsrichtung Um bevorzugt vollständig geschlossen.

Gemäß der Erfindung sind bevorzugt eine Mehrzahl von Schmierstoffkanälen 300 in Umfangrichtung Um verteilt (Teilung), insbesondere regelmäßig verteilt, an/in der Dämpferscheibe 10 und/oder der Dämpfernabe 20 vorgesehen. So offenbart die Fig. 4 fünf Schmierstoffkanäle 300 in der Dämpferscheibe 10 (bei acht Zuflussöffnungen 310 bzw. Zuflüssen zu den Schmierstoffkanälen 300 in einem Rotationsbauteil 80), und es offenbaren die Fig. 7, 9 und 11 jeweils vier Schmierstoffkanäle 300 in der Dämpfernabe 20. Eine Mehrzahl von Schmierstoffkanälen 300 ist natürlich auch auf die anderen Ausführungsformen der Erfindung anwendbar, bei welchen wenigstens ein Schmierstoffkanal 300 in der erfindungsgemäßen Nassraum-Baugruppe 2 eingerichtet bzw. vorgesehen ist. - Im Folgenden soll im Rahmen der Erfindung die erfindungsgemäße Nassraum-Baugruppe 2 anhand der Zeichnung näher erläutert werden, welche dabei als eine Dämpfer-Baugruppe 2 eines Torsionsschwingungsdämpfers 1 ausgebildet ist.

Im Folgenden werden die Schmierstoffkanäle 300 einzelner Ausführungsformen der Erfindung anhand eines beispielhaften grundlegenden Aufbaus der Dämpfer-Baugruppe 2 näher beschrieben. Die Dämpfer-Baugruppe 2 ist exemplarisch und kann, bei einer Anwendung auf einen bestimmten Dämpfer 0 oder eine bestimmte Dämpfereinrichtung 1, z. B. einen Torsionsschwingungsdämpfer 1 ggf. substituierte, ggf. zusätzliche und/oder ggf. weniger oder Bauteile aufweisen. Natürlich kann der betreffende Dämpfer 0 bzw. die betreffende Dämpfereinrichtung 1 auch an/in einer anderen Position des Antriebsstrangs vorgesehen sein. - Die in der Zeichnung wiederholt dargestellte Dämpfer-Baugruppe 2 weist ein Dämpferrotationsbauteil 10 auf, das auf einem zweiten Dämpferrotationsbauteil 20 radial (Lagerung 12) und/oder axial (Lagerung 14) gelagert ist.

Eine Radiallagerung 12 ist von zwei jeweils in Axialrichtung Ax und Umfangsrichtung Um verlaufenden Lagerflächen 112, 212, und eine Axiallagerung 14 ist von zwei jeweils in Radialrichtung Ra und Umfangsrichtung Um verlaufenden Lagerflächen 112, 212 des Dämpferrotationsbauteils 10 und des zweiten Dämpferrotationsbauteils 20 gebildet. Dazwischen befindet sich jeweils ein mit dem Schmierstoff zu versorgender Lagerspalt. Eine zweite Axiallagerung für das Dämpferrotationsbauteil 10 auf dem zweiten Dämpferrotationsbauteil 20 ist von einem Lagerteil 70, z. B.: einem Axiallagerteil 70 bzw. -blech 70, und einem in das zweite Dämpferrotationsbauteil 20 eingreifenden Sicherungsring 72 bzw. -blech 72 übernommen. Natürlich ist lediglich der Sicherungsring 72 oder ein anderes Bauteil anwendbar, d. h. in diesem Fall fehlt das Axiallagerteil 70. Hierdurch kann sich das Dämpferrotationsbauteil 10 in Axialrichtung Ax beidseitig abgestützt in Umfangsrichtung Um auf dem zweiten Dämpferrotationsbauteil 20 verdrehen.

Das zweite Dämpferrotationsbauteil 20 ist vorliegend als eine mit einer Getriebeeingangswelle drehfest verbindbare Lagerscheibe 20 bzw. Dämpfernabe 20 ausgebildet. Das Dämpferrotationsbauteil 10 ist vorliegend bevorzugt als ein Pendelflansch 10 ausgebildet, der mit einem dritten Dämpferrotationsbauteil 50 drehfest verbunden oder integral mit diesem ausgebildet ist. Am Pendelflansch 10 sind Pendelmassen für eine (Trapez-)Fliehkraftpendeleinrichtung beweglich aufhängbar bzw. aufgehängt. Das dritte Dämpferrotationsbauteil 50 ist vorliegend als ein Turbinenrad 50 bzw. eine Turbine 50 eines hydrodynamischen Drehmomentwandlers 0 ausgebildet. Der Pendelflansch 10 und das Turbinenrad 50 bilden zusammen einen Dämpfereingang für die Dämpfereinrichtung 1.

Das zweite Dämpferrotationsbauteil 20 weist abseits des Axiallagerteils 70 und benachbart zum Pendelflansch 10 bzw. Turbinenrad 50 ein viertes Dämpferrotationsbauteil 60 auf, das drehfest mit dem zweiten Dämpferrotationsbauteil 20 verbunden (z. B. mittels einer Schweiß- oder Nietverbindung) oder integral mit diesen ausgebildet ist. Das vierte Dämpferrotationsbauteil 60 ist vorliegend als ein Nabenflansch 60 ausgebildet. Der Nabenflansch 60 kann sich axial an einem Vorsprung des zweiten Dämpferrotationsbauteils 20 abstützen, wobei sich an einer dem Nabenflansch 60 gegenüberliegenden Seite des Vorsprungs ein fünftes Dämpferrotationsbauteil 80 axial abstützten kann, das auf einer dem Vorsprung abgewandten Seite mit einem Sicherungsring auf dem zweiten Dämpferrotationsbauteil 20 axial gesichert ist.

Das fünfte Dämpferrotationsbauteil 80 ist vorliegend als ein Kupplungsrotationsbauteil 80, z. B.: ein (Außen-)Lamellenträger 80 einer Kupplung, insbesondere einer Wandlerkupplung ausgebildet, wobei das Kupplungsrotationsbauteil 80 radial und axial auf der Dämpfernabe 20 z. B. analog zum Pendelflansch 10 bzw. zum Turbinenrad 50 gelagert sein kann. Die unten folgenden Ausführungen zu einem erfindungsgemäßen Schmierstoffkanal 300 können dabei analog auf das Kupplungsrotationsbauteil 80 übertragen werden. - Ein als eine Gegenscheibe 90 ausgebildetes sechstes Dämpferrotationsbauteil 90 kann zusammen mit dem Dämpferrotationsbauteil 10 einen Energiespeicher 40 des Dämpfers 1, z. B.: ein Federelement 40, beispielsweise eine (Linear-/Bogen-)Druckfeder 40, haltern. Die Gegenscheibe 90 kann zusätzlich oder alternativ zum Pendelflansch 10 auf der Dämpfernabe 20 gelagert sein. D. h. auch, dass statt dem Pendelflansch 10 lediglich die Gegenscheibe 90 auf der Dämpfernabe 20 lagerbar ist. D. h. die Erfindung ist analog auf eine Gegenscheibe 90 anwendbar.

Die Fig. 1 zeigt die erste Ausführungsform eines bevorzugt über den Umfang Um mehrfach vorhandenen erfindungsgemäßen Schmierstoffkanals 300. Der Schmierstoffkanal 300 erstreckt sich dabei von einer axialen und freien Außenseite (rechts in der Fig. 1) durch das Lagerteil 70 und den Pendelflansch 10 bevorzugt vollständig hindurch. Dies erfolgt durch z. B. im Wesentlichen u-förmige Durchgangsausnehmungen im Lagerteil 70 (Zuflussöffnung 310) und im Pendelflansch 10, wobei die Durchgangsausnehmung im Pendelflansch 10 dessen Lagerfläche 112 und auch dessen Lagerfläche 114 unterbricht, wodurch der Schmierstoff von einer Seite axial an die Gleitlagerung 12 und die Gleitlagerung 14 gelangen kann. Vgl. hierzu auch die Ausführungen zur Fig. 4. - Es ist möglich, die Durchgangsausnehmung im Pendelflansch 10 nicht vollständig durch den Pendelflansch 10 hindurchgehen zu lassen (Ausnehmung), wobei jedoch die Versorgung der Gleitlagerung 14 unterbrochen wird.

Die Fig. 2 zeigt als zweite Ausführungsform eine abgewandelte erste Ausführungsform, wobei das Lagerteil 70 geschlossen ist und eine einseitige Versorgung der Gleitlagerungen 12, 14 mit Schmierstoff von einer axial gegenüberliegenden Seite erfolgt, wofür das Turbinenrad 50 eine mit dem Pendelflansch 10 im Wesentlichen fluchtende Durchgangsausnehmung aufweist. Ein Zufluss zum Schmierstoffkanal 300 erfolgt bei der Fig. 2 im Wesentlichen radial durch einen Spalt zwischen dem Turbinenrad 50 und dem Nabenflansch 60. Wie in der Fig. 1 öffnet der Schmierstoffkanal 300 die Lagerflächen 112, 114 des Pendelflanschs 10 und endet im Pendelflansch 10 an den Lagerflächen 212, 214 der Dämpfernabe 20 und somit an/in den Lagerspalten der Gleitlagerungen 12, 14. Ferner kann, wie auch in der Fig. 1, vom Schmierstoffkanal 300 im Pendelflansch 10 Schmierstoff in den Freischnitt 215 gelangen, welcher ferner die Gleitlagerung 12, 14 mit Schmierstoff versorgen kann.

Die in der Fig. 3 dargestellte dritte Ausführungsform kombiniert die Ausführungsformen der Fig. 1 mit der Fig. 2, wobei ein im Wesentlichen axial durchströmbarer Schmierstoffkanal 300 entsteht. D. h. der Schmierstoffkanal 300 endet nicht mehr an/in der Gleitlagerung 12, 14, sondern passiert beide Gleitlagerungen 12, 14. Durch einen solchen Schmierstoffkanal 300 kann der Schmierstoff zu den Gleitlagerungen 12, 14 hin- und in dieselbe Richtung weiterfließend auch wieder abtransportiert werden. Hierbei begrenzen die Lagerflächen 212, 214 den Schmierstoffkanal 300, wobei die Lagerspalte der Gleitlagerungen 12, 14 dem Schmierstoffkanal 300 als offene Bereiche zugehörig sind. D. h. die Lagerflächen 212, 214 bilden einen Bereich einer Begrenzung des Schmierstoffkanals 300, wohingegen der Schmierstoffkanal 300 die dazu korrespondierenden Lagerflächen 112, 114 durchbricht.

Da sich der Pendelflansch 10 gegenüber dem Lagerteil 70 relativ verdrehen kann bzw. vice versa, ist es bevorzugt, im Pendelflansch 10 und im Lagerteil 70 (Zufluss als Abschnitt eines Schmierstoffkanals 300) jeweils eine unterschiedliche Anzahl von Abschnitten des Schmierstoffkanals 300 vorzusehen, und eine jeweilige Umfangsteilung derart einzurichten, dass immer wenigstens ein Schmierstoffkanal 300 wenigstens teilweise offen ist, was in der Fig. 4 dargestellt ist. Bevorzugt sind die betreffenden Abmessungen und Teilungen derart gewählt, dass bei einem nur teilweise geöffneten Schmierstoffkanal 300, es wenigstens einen zweiten Schmierstoffkanal 300 gibt, der wenigstens auch nur teilweise geöffnet ist. Vgl. Fig. 4, die einen vollständig offenen oberen (mit Bezug auf die Fig. 4) Schmierstoffkanal 300 zeigt, wobei ein unterer (mit Bezug auf die Fig. 4) Schmierstoffkanal 300 gerade noch offen ist und ein zweiter unterer Schmierstoffkanal 300 gerade geöffnet wird. Der zweite untere Schmierstoffkanal 300 öffnet sich dabei bevorzugt in einem Maß, mit welchem sich der obere Schmierstoffkanal 300 schließt.

Die Fig. 5 zeigt die vierte Ausführungsform mit einem im Wesentlichen radial verlaufenden Schmierstoffkanal 300, durch welchen hindurch der Schmierstoff von radial außen an/in die Lagerung 12 transportierbar ist. Die Lagerung 14 kann dabei durch eine Ausnehmung im Turbinenrad 50 mit Schmierstoff versorgt werden. Für diesen Radialkanal weist bevorzugt der Pendelflansch 10 eine wenigstens in Radialrichtung Ra verlaufende Nut, Vertiefung bzw. Ausnehmung auf, die die Lagerfläche 112 öffnet und begrenzt. Der Radialkanal öffnet die Lagerfläche 112 durchbricht sie aber nicht. Ferner ist der Radialkanal durch das direkt an dem Pendelflansch 10 anliegende Lagerteil 70 begrenzt. Es ist möglich, einen solchen Radialkanal alternativ oder zusätzlich im Lagerteil 70 einzurichten.

Die in den Fig. 6 und 7 dargestellte fünfte Ausführungsform der Erfindung offenbart einen radial inneren Zufluss an/in die Lagerung 12. Hierbei weist der Pendelflansch 10 eine über seine axiale Breite in Umfangsrichtung Um vollständig geschlossene Lagerfläche auf, wobei der Schmierstoffkanal 300 von einer Durchgangsausnehmung im Lagerteil 70 (Zufluss) und einer damit in Fluidkommunikation stehenden Ausnehmung in der Dämpfernabe 20 konstituiert ist. Die Ausnehmung unterbricht die Lagerfläche 212 der Dämpfernabe 20, wodurch der Schmierstoffkanal 300 an/in die Lagerung 12 geführt ist. Die Ausnehmung erstreckt sich dabei nicht in den Freischnitt 215 zwischen den Lagerflächen 212, 214 hinein. In anderen Ausführungsformen der Erfindung ist dies natürlich möglich (vgl. Fig. 8 und 9). Betreffende Abmessungen und Teilungen des Lagerteils 70 und der Dämpfernabe 20 können analog zu oben gehandhabt werden. Die Lagerflächen 112, 114 des Pendelflansches 10 bleiben hierbei bevorzugt unverändert.

Die Fig. 8 und 9 zeigen die sechste Ausführungsform, welche die fünfte Ausführungsform derart erweitert, dass analog zur Fig. 3 der Schmierstoffkanal 300 nicht mehr an/in der Gleitlagerung 12 endet, sondern beide Gleitlagerungen 12, 14 passiert. Hierdurch entsteht wiederum ein durchströmbarer Schmierstoffkanal 300, der hier einen axialen und radialen Fluss des Schmiermittels realisiert, wobei der Schmierstoff zu den Gleitlagerungen 12, 14 hin- und in dieselbe Richtung weiterfließend auch wieder abtransportiert werden kann. Hierbei begrenzen die Lagerflächen 112, 114 den Schmierstoffkanal 300 bereichsweise, wobei die Lagerspalte der Gleitlagerungen 12, 14 dem Schmierstoffkanal 300 wiederum als offene Bereiche zugehörig sind. D. h. die Lagerflächen 112, 114 bilden einen Bereich einer Begrenzung des Schmierstoffkanals 300, wohingegen der Schmierstoffkanal 300 die dazu korrespondierenden Lagerflächen 212, 214 durchbricht.

Zusätzlich zur fünften Ausführungsform ist bei dieser Ausführungsform die Ausnehmung in der Dämpfernabe 20 verlängert, wobei die Ausnehmung nicht nur die Lagerfläche 212 sondern auch noch die Lagerfläche 214 der Dämpfernabe 20 wenigstens begrenzt (Sackausnehmung) oder durchbricht, was gut in der Fig. 9 zu erkennen ist. Hierbei ist der Schmierstoffkanal 300 durch die Lagerung 12 und die Lagerung 14 hindurchgeführt. Die Ausnehmung erstreckt sich dabei durch in den Freischnitt 215 hindurch in den Absatz der Dämpfernabe 20 hinein, welcher als axiale Außenseite die Lagerfläche 214 aufweist. Die betreffenden Ausnehmungen für die Versorgung der Lagerungen 12, 14 mit Schmierstoff stehen dabei in Fluidkommunikation, es ist jedoch auch möglich, für die jeweilige Lagerung 12/14 eine jeweilige Ausnehmung vorzusehen (Sackausnehmungen).

Die Fig. 10 und 11 zeigen die siebte Ausführungsform, welche einen wenigstens als als radiale Bohrung ausgebildeten Schmierstoffkanal 300 in der Dämpfernabe 20 aufweist. Die Bohrung mündet dabei in einer Ausnehmung, welche in axialer Richtung in die Dämpfernabe 20 eingebracht ist (vgl. Fig. 10 und 11) oder die Bohrung mündet direkt an/in der Lagerfläche 212. Im ersten Fall durchbricht die Ausnehmung die Lagerfläche 212 bevorzugt vollständig, im zweiten Fall begrenzt die Bohrung die Lagerfläche 212 in der Form, dass sie im Wesentlichen eine Kreisform aus der Lagerfläche 212 herausschneidet. Hierdurch ist der Schmierstoffkanal 300 an/in die Lagerung 12 geführt. Die Ausnehmung erstreckt sich dabei nicht in den Freischnitt 215 zwischen den Lagerflächen 212, 214 hinein. In anderen Ausführungsformen der Erfindung ist dies natürlich möglich. Die Lagerflächen 112, 114 des Pendelflansches 10 bleiben hierbei bevorzugt unverändert.

Bevorzugt ist es, dass ein Abschnitt eines einzelnen Schmierstoffkanals 300 oder ein einzelner Schmierstoffkanal 300 eine (Durchgangs-)Ausnehmung an bzw. "über"/"unter" der betreffenden Lagerfläche 112, 114; 212, 214 aufweist. D. h. die Dämpferscheibe 10 und/oder die Dämpfernabe 20 weist eine (Durchgangs-)Ausnehmung derart auf, dass die (Durchgangs-)Ausnehmung die betreffende Lagerfläche 112, 114; 212, 214 öffnet, d. h. unterbricht oder begrenzt, und die betreffende andere Lagerfläche 212, 214; 112, 114 den Schmierstoffkanal 300 flächig begrenzt oder der Schmierstoffkanal 300, gegenüberliegend zu seiner Zuflussöffnung 310 dort endet (abgesehen vom Lagerspalt der betreffenden Gleitlagerung 12, 14). Ferner ist es bevorzugt, dass ein Zufluss zur betreffenden Lagerfläche 112, 114; 212, 214 einen fluidmechanisch wirksameren, d. h. im Regelfall größeren, Querschnitt aufweist, als ein Abfluss von der betreffenden Lagerfläche 112, 114; 212, 214. Hierdurch kann sich an der betreffenden Lagerfläche 112, 114; 212, 214 ein Druck im Schmierstoff aufbauen.

Gemäß der Erfindung ergibt sich ein verschleißverbesserter bzw. -optimierter Reibkontakt an/in einer Lagerung. Durch ein erfindungsgemäßes Nassraum-Rotationsbauteil bzw. eine erfindungsgemäße Nassraum-Baugruppe ist ein Reibverschleiß an einer Lagerfläche des Nassraum-Rotationsbauteils bzw. in einem Kontaktbereich zwischen einem Nassraum-Rotationsbauteil und dem zweiten Nassraum-Rotationsbauteil verringert. Hierbei weist die Erfindung keinen zusätzlichen axialen und/oder radialen Bauraumverbrauch auf, sodass bestehende Dämpfer bzw. Dämpfereinrichtungen, insbesondere Torsionsschwingungsdämpfer, ohne auch nur eine partielle Umkonstruktion mit der erfindungsgemäßen Lösung versehen werden können. Die Erfindung ist konstruktiv einfach und kostengünstig umzusetzen und verschlechtert weder eine Herstellung noch eine Montage des Dämpfers. Der erfindungsgemäße Dämpfer weist eine höhere Betriebsfestigkeit bei geringeren Wartungsintervallen auf.

Gemäß der Erfindung können bestehende Bauteile derart modifiziert werden, dass ein Transport bzw. ein Fluss eines Schmierstoffs (Öl) an/in die Lagerung gesichert ist. Hierbei kann das Öl z. B. von einer axialen Seite oder von beiden axialen Seiten in den Reibkontakt fließen. Ferner kann das Öl zusätzlich oder alternativ z. B. von radial außen und/oder von radial innen in den Reibkontakt fließen. Analoges gilt für einen Abtransport. Bevorzugt hierfür sind z. B. Schmierstoffkanäle in einem Scheibenbauteil, durch die das Öl an/in den Kontaktbereich zwischen die (beiden) Bauteile fließen kann. Die Schmierstoffkanäle können umlaufend oder als Muster von mehreren Nuten angewendet werden. Sollen mehrere Bauteile auf- oder nebeneinander geschichtet verbaut werden, so sollten passende Teilungen gewählt sein, damit bei einer jeden Einbaulage ein Zu-/Ab-/Durchfluss des Öls gewährleistet ist. Dies erfolgt z. B. mittels einer geraden Anzahl oder einer Mehrzahl/Vielzahl an Schmierstoffkanälen im ersten Bauteil und einer ungeraden Anzahl oder einer Vielzahl/Mehrzahl an Schmierstoffkanälen im zweiten Bauteil.

### Bezugszeichenliste

- 0: Drehmomentübertragungseinrichtung; (Automatik-)Getriebe, Wandler für ein Fahrzeug (Personenkraftwagen, Personentransportwagen, Nutzfahrzeug, Baumaschine etc., mit Benzin- oder Dieselmotor), insbesondere einen Antriebsstrang eines Kraftfahrzeugs - z. B.: (hydrodynamischer) Drehmomentwandler, Dämpfer, (Mehrfach-)Kupplung, Kupplungsbaugruppe, Zweimassenwandler, ggf. mit (Trapez-)Fliehkraftpendel etc. Baugruppe oder Kombination davon, mit Dämpfereinrichtung 1
- 1: Dämpfereinrichtung, Dämpfer, Drehschwingungsdämpfer, Torsionsschwingungsdämpfer, Turbinendämpfer, Pumpendämpfer etc.
- 2: Nassraum-Baugruppe, Dämpfer-Baugruppe, Dämpferrotationsbauteil(e)-Anordnung, Kupplungs-Baugruppe, Kupplungsrotationsbauteil(e)-Anordnung, Naben-Baugruppe, Zweimassenwandler-Baugruppe, z. B.: ggf. erfindungsgemäßes (Nassraum-)Rotationsbauteil 10 und zweites (Nassraum-)Rotationsbauteil 20 sowie ggf. ein oder eine Mehrzahl weiterer Bauteile 40, 50, 60, 70, 72, 80, 90
- 4: Nassraum der Drehmomentübertragungseinrichtung 0 bzw. der Dämpfereinrichtung 1, der Nassraum-Baugruppe 2, des Nassraum-Rotationsbauteils 10
- 10: (erstes/zweites) (Nassraum-)Rotationsbauteil, Dämpferrotationsbauteil, drehfest mit dem dritten (Nassraum-)Rotationsbauteil 50 verbunden, ggf. integral mit dem dritten (Nassraum-)Rotationsbauteil 50 ausgebildet, z. B.: Dämpferteil: Dämpferscheibe, Dämpfereingangsteil, Dämpferausgangsteil, Dämpferflansch, Seitenscheibe, Gegenscheibe, Mitnehmerscheibe, Pendelflansch, ggf. mit Retainer (Bogen-/Linearfederretainer); Kupplungsrotationsbauteil, Lamellenträger, Außen-/Innenlamellenträger; Schwungmasse / (Dämpfer-)Nabe, Lagerscheibe, Zwischennabe; Welle
- 12: (Gleit-)Lagerung des (Nassraum-)Rotationsbauteils 10 auf dem zweiten (Nassraum-)Rotationsbauteil 20, Radiallagerung [oder (Gleit-)Lagerung des zweiten (Nassraum-)Rotationsbauteils 20 auf dem (Nassraum-)Rotationsbauteil 10 bei einer kinematischen Umkehrung]
- 14: (zweite) (Gleit-)Lagerung des (Nassraum-)Rotationsbauteils an dem zweiten (Nassraum-)Rotationsbauteil 20, Axiallagerung [oder (Gleit-)Lagerung des zweiten (Nassraum-)Rotationsbauteils 20 an dem (Nassraum-)Rotationsbauteil 10 bei einer kinematischen Umkehrung]
- 20: zweites/(erstes) (Nassraum-)Rotationsbauteil, Dämpferrotationsbauteil, drehfest mit dem vierten (Nassraum-)Rotationsbauteil 60 verbunden, ggf. integral mit dem vierten (Nassraum-)Rotationsbauteil 60 ausgebildet, z. B.: (Dämpfer-) Nabe, Lagerscheibe, Zwischennabe; Welle / Dämpferteil: Dämpfereingangsteil, Dämpferausgangsteil, Dämpferflansch, Seitenscheibe, Gegenscheibe, Mitnehmerscheibe, Pendelflansch, ggf. mit Retainer (Bogen-/Linearfederretainer); Kupplungsrotationsbauteil, Lamellenträger, Außen-/Innenlamellenträger; Schwungmasse
- 40: Energiespeicher, z. B.: Federelement, (Linear-/Bogen-)Druckfeder
- 50: drittes / ein zweites (Nassraum-)Rotationsbauteil, Dämpferrotationsbauteil, drehfest mit dem (Nassraum-)Rotationsbauteil 10 verbunden, ggf. integral mit dem (Nassraum-)Rotationsbauteil 10 ausgebildet, z. B.: Turbinenrad, Turbine
- 60: viertes / ein zweites (Nassraum-)Rotationsbauteil, Dämpferrotationsbauteil drehfest mit dem zweiten (Nassraum-)Rotationsbauteil 20 verbunden, ggf. integral mit dem zweiten (Nassraum-)Rotationsbauteil 20 ausgebildet, z. B.: Nabenflansch
- 70: Lagerteil, Rotationsbauteil, z. B.: Axiallagerteil/-blech
- 72: Sicherungsring, Rotationsbauteil, z. B.: Sicherungsblech
- 80: fünftes / ein zweites (Nassraum-)Rotationsbauteil, Kupplungsrotationsbauteil, z. B.: Lamellenträger, bevorzugt Außenlamellenträger, einer Kupplung, insbesondere einer Wandlerkupplung
- 90: sechstes / ein zweites (Nassraum-)Rotationsbauteil, Dämpferrotationsbauteil, z. B.: Gegenscheibe
- 112: (Gleit-)Lagerfläche des (Nassraum-)Rotationsbauteils 10 für das zweite (Nassraum-)Rotationsbauteil 20, abgesehen von der Öffnung 302 des Schmierstoffkanals 300 bzw. den Öffnungen 302 der Schmierstoffkanäle 300 in Umfangsrichtung Um bevorzugt vollständig geschlossen, d. h. bevorzugt zylinderförmig (radial innen)
- 114: (zweite) (Gleit-)Lagerfläche des (Nassraum-)Rotationsbauteils 10 für das zweite (Nassraum-)Rotationsbauteil 20, abgesehen von der Öffnung 304 des Schmierstoffkanals 300 bzw. den Öffnungen 304 der Schmierstoffkanäle 300 in Umfangsrichtung Um bevorzugt vollständig geschlossen, d. h. bevorzugt kreisringförmig (axial außen und sich in Radialrichtung Ra von innen wegerstreckend)
- 212: (Gleit-)Lagerfläche des zweiten (Nassraum-)Rotationsbauteils 20 für das (Nassraum-)Rotationsbauteil 10, abgesehen von der Öffnung 302 des Schmierstoffkanals 300 bzw. Öffnungen 302 der Schmierstoffkanäle 300 im Umfangsrichtung Um bevorzugt vollständig geschlossen, d. h. bevorzugt zylinderförmig (radial außen)
- 214: (Gleit-)Lagerfläche des zweiten (Nassraum-)Rotationsbauteils 20 für das (Nassraum-)Rotationsbauteil 10, abgesehen von der Öffnung 302 des Schmierstoffkanals 300 bzw. Öffnungen 302 der Schmierstoffkanäle 300 im Umfangsrichtung Um bevorzugt vollständig geschlossen, d. h. bevorzugt kreisringförmig (axial innen und sich in Radialrichtung Ra von außen nach innen erstreckend)
- 215: Freischnitt zwischen der (Gleit-)Lagerfläche 212 und der (Gleit-)Lagerfläche 214
- 300: Schmierstoffkanal für einen Transport des Schmierstoffs zur Gleitlagerung 12, 14 bzw. zur Lagerfläche 112, 114 und/oder zur Lagerfläche 212, 214, z. B.: Aussparung, Freisparung, Ausnehmung, Durchgangsausnehmung, Längsausnehmung, Vertiefung, Prägung, Nut, Bohrung, Kanal, Passage etc., ggf. verschließbar und/oder zeitlich in seiner Form, insbesondere seiner Länge, veränderlich
- 301: Kante, Rand zwischen dem Schmierstoffkanal 300 und der Lagerfläche 112 und/oder der Lagerfläche 212, Begrenzung/Unterbrechung des Schmierstoffkanals 300 und der Lagerfläche 112, und/oder der Lagerfläche 212
- 302: Öffnung zwischen dem Schmierstoffkanal 300 und der Lagerfläche 112 und/oder der Lagerfläche 212, bzw. in der Lagerfläche 112 und/oder der Lagerfläche 112
- 303: Kante, Rand zwischen dem Schmierstoffkanal 300 und der Lagerfläche 114 und/oder der Lagerfläche 214, Begrenzung/Unterbrechung des Schmierstoffkanals 300 und der Lagerfläche 114, und/oder der Lagerfläche 214
- 304: Öffnung zwischen dem Schmierstoffkanal 300 und der Lagerfläche 114 und/oder der Lagerfläche 214, bzw. in der Lagerfläche 114 und/oder der Lagerfläche 114
- 310: Zuflussöffnung für den Schmierstoffkanal 300, ggf. an beiden Längsenden des betreffenden Schmierstoffkanals 300
- Ax: Axialrichtung, Längsrichtung, Rotationsachse der Kurbelwelle, des Antriebsstrangs, der Drehmomentübertragungseinrichtung 0, dem (Automatik-)Getriebe 0, dem Wandler 0, der Dämpfereinrichtung 1, der Nassraum-Baugruppe 2, des (Nassraum-)Rotationsbauteils 10, der Tilgereinrichtung, axial
- Ra: Radialrichtung der Kurbelwelle, des Antriebsstrangs, der Drehmomentübertragungseinrichtung 0, dem (Automatik-)Getriebe 0, dem Wandler 0, der Dämpfereinrichtung 1, der Nassraum-Baugruppe 2, des (Nassraum-)Rotationsbauteils 10, der Tilgereinrichtung, radial
- Um: Umfangsrichtung, Umfang der Kurbelwelle, des Antriebsstrangs, der Drehmomentübertragungseinrichtung 0, dem (Automatik-)Getriebe 0, dem Wandler 0, der Dämpfereinrichtung 1, der Nassraum-Baugruppe 2, des (Nassraum-)Rotationsbauteils 10, der Tilgereinrichtung, tangential, (Relativ-)Drehbewegungen bzw. Rotationsbewegungen finden im Umfangsrichtung Um statt

## Patentansprüche

1. Nassraum-Rotationsbauteil, bevorzugt Dämpferrotationsbauteil (10/20) eines Torsionsschwingungsdämpfers (1) für einen Wandler (0) eines Fahrzeugs, insbesondere eines Personenkraftwagens, mit
einer in eine Umfangsrichtung (Um) des Nassraum-Rotationsbauteils (10/20) umlaufenden Lagerfläche (112/212, 114/214) zum Lagern des Nassraum-Rotationsbauteils (10/20) auf/an einem zweiten Nassraum-Rotationsbauteil (20/10), **dadurch gekennzeichnet, dass**
das Nassraum-Rotationsbauteil (10/20) wenigstens einen darin/daran vorgesehenen Schmierstoffkanal (300) für einen Transport eines Schmierstoffs zur Lagerfläche (112/212, 114/214) aufweist, wobei der Schmierstoffkanal (300) an einer ausgewählten Stelle an/in der Lagerfläche (112/212, 114/214) mündet.

2. Nassraum-Baugruppe, bevorzugt Dämpfer-Baugruppe (2) eines Torsionsschwingungsdämpfers (1) für einen Wandler (0) eines Fahrzeugs, insbesondere eines Personenkraftwagens, mit
einem Nassraum-Rotationsbauteil (10/20) und einem zweiten Nassraum-Rotationsbauteil (20/10), wobei zwischen dem Nassraum-Rotationsbauteil (10/20) und dem zweiten Nassraum-Rotationsbauteil (20/10) eine in eine Umfangsrichtung (Um) der Nassraum-Baugruppe (2) erstreckende Lagerung (12/14) ausgebildet ist, **dadurch gekennzeichnet, dass**
die Nassraum-Baugruppe (2) wenigstens einen Schmierstoffkanal (300) aufweist, durch welchen hindurch ein Schmierstoff selektiv an/in die Lagerung (12/14) transportierbar ist.

3. Nassraum-Rotationsbauteil oder Nassraum-Baugruppe gemäß einem der vorhergehenden Ansprüche, **dadurch gekennzeichnet, dass**:
• die Lagerfläche (112/212, 114/214) und der Schmierstoffkanal (300) eine gemeinsame Kante (301, 303) oder einen gemeinsamen Rand (301, 303) besitzen;
• die gemeinsame Kante (301, 303) oder der gemeinsame Rand (301, 303) eine Begrenzung einer Öffnung (302, 304) des Schmierstoffkanals (300) an der Lagerfläche (112/212, 114/214) ist;
• die Öffnung (302, 304), die Kante (301, 303) und/oder der Rand (301, 303) eine Begrenzung oder eine Unterbrechung der Lagerfläche (112/212, 114/214) bildet;
• das Nassraum-Rotationsbauteil (10/20) als ein Dämpferrotationsbauteil (10/20), insbesondere ein Dämpferteil (10), ein Kupplungsrotationsbauteil, eine Schwungmasse oder eine Nabe (20) ausgebildet ist;
• das zweite Nassraum-Rotationsbauteil (20/10) als ein Dämpferrotationsbauteil (20/10), insbesondere eine Nabe (20), eine Schwungmasse, ein Kupplungsrotationsbauteil, oder ein Dämpferteil (10) ausgebildet ist; und/oder
• zwei, drei, vier, fünf, sechs, sieben, acht, neun, zehn, elf, zwölf, dreizehn, vierzehn oder mehr Schmierstoffkanäle (300) vorgesehen sind.

4. Nassraum-Rotationsbauteil oder Nassraum-Baugruppe gemäß einem der vorhergehenden Ansprüche, **dadurch gekennzeichnet, dass** der Schmierstoffkanal (300) mit der Lagerfläche (112/212, 114/214) verschnitten ist, wobei der Schmierstoffkanal (300) bevorzugt eine Ausnehmung, eine Durchgangsausnehmung, eine Längsausnehmung, eine Vertiefung, eine Prägung, eine Nut, eine Bohrung, einen Kanal und/oder eine Passage im Nassraum-Rotationsbauteil (20/10) bzw. in der Nassraum-Baugruppe (2) aufweist, und/oder
der Schmierstoffkanal (300) wenigstens abschnittsweise von einer Schmierstoffpassage in der Nassraum-Baugruppe (2) gebildet ist, welche zwischen zwei oder mehr Bauteilen (10/20, 20/10, 50, 60, 70, 72, 80, 90) der Nassraum-Baugruppe (2) ausgebildet ist.

5. Nassraum-Rotationsbauteil oder Nassraum-Baugruppe gemäß einem der vorhergehenden Ansprüche, **dadurch gekennzeichnet, dass** der Schmierstoffkanal (300) im Wesentlichen radial und/oder im Wesentlichen axial im Nassraum-Rotationsbauteil (20/10) eingerichtet ist, bzw. sich der Schmierstoffkanal (300) im Wesentlichen radial und/oder im Wesentlichen axial in der Nassraum-Baugruppe (2) erstreckt, wobei
der Schmierstoff bevorzugt von einer axialen Seite, von beiden axialen Seiten, von radial innen und/oder von radial außen an die Lagerfläche (112/212, 114/214) des Nassraum-Rotationsbauteils (20/10) bzw. an/in die Lagerung (12, 14) zwischen dem Nassraum-Rotationsbauteil (10/20) und dem zweiten Nassraum-Rotationsbauteil (20/10) transportierbar ist.

6. Nassraum-Baugruppe gemäß einem der vorhergehenden Ansprüche, **dadurch gekennzeichnet, dass** die Nassraum-Baugruppe (2) für ihren Betrieb derart ausgebildet ist, dass
für eine Mehrzahl/Vielzahl von Schmierstoffkanälen (300) und eine Vielzahl/ Mehrzahl von Zuflüssen für die Schmierstoffkanäle (300) eine Teilung der Schmierstoffkanäle (300) und eine Teilung der Zuflüsse für die Schmierstoffkanäle (300) in Abhängigkeit einer gegenseitigen Verdrehbarkeit betreffender Rotationsbauteile (10/20, 20/10, 50, 60, 70, 72, 80, 90) gewählt ist, wobei bevorzugt im Wesentlichen in einer jeden Verdrehlage der betreffenden Rotationsbauteile (10/20, 20/10, 50, 60, 70, 72, 80, 90) zueinander, wenigstens ein Schmierstoffkanal (300) durch einen Zufluss hindurch mit Schmierstoff versorgbar ist.

7. Nassraum-Baugruppe gemäß einem der vorhergehenden Ansprüche, **dadurch gekennzeichnet, dass** der Schmierstoffkanal (300) von wenigstens einem Dämpferrotationsbauteil (10/20, 20/10, 50, 60) und/oder einem Lager wenigstens einseitig begrenzt ist, wobei
das Dämpferrotationsbauteil (10/20, 20/10, 50, 60) bevorzugt ein Dämpfereingangsteil (10), ein Pendelflansch (10), eine Nabe (20), eine Turbine (50) und/oder ein Nabenflansch (60), und/oder das Lager bevorzugt ein Axiallager ist.

8. Nassraum-Baugruppe gemäß einem der vorhergehenden Ansprüche, **dadurch gekennzeichnet, dass** der Schmierstoffkanal (300) von einer Nabe (20) und wenigstens einem Dämpferrotationsbauteil (10, 50, 60) und/oder einem Lagerteil (70) begrenzt ist, wobei
das Dämpferrotationsbauteil (10, 50, 60) bevorzugt ein Dämpfereingangsteil (10), ein Pendelflansch (10), eine Turbine (50) und/oder ein Nabenflansch (60), und/oder das Lagerteil (70) bevorzugt ein Axiallagerteil (70) ist.

9. Nassraum-Baugruppe gemäß einem der vorhergehenden Ansprüche, **dadurch gekennzeichnet, dass** ein Zufluss zum Schmierstoffkanal (300) oder der Schmierstoffkanal (300) von zwei Dämpferrotationsbauteilen (50, 60), oder einem Dämpferrotationsbauteil (10) und einem Lagerteil (70) begrenzt ist, wobei die zwei Dämpferrotationsbauteile (50, 60) bevorzugt eine Turbine (50) und ein Nabenflansch (60) sind bzw. das Dämpferrotationsbauteil (10) ein Dämpfereingangsteil (10) oder ein Pendelflansch (10), und das Lagerteil (70) ein Axiallagerteil (70) ist.

10. Nassraum-Baugruppe gemäß einem der vorhergehenden Ansprüche, **dadurch gekennzeichnet, dass** zwischen dem Nassraum-Rotationsbauteil (10/20) und dem zweiten Nassraum-Rotationsbauteil (20/10) eine zweite sich in die Umfangsrichtung (Um) erstreckende Lagerung (14/12) ausgebildet ist, wobei die Nassraum-Baugruppe (2) wenigstens einen Schmierstoffkanal (300) aufweist, durch welchen hindurch der Schmierstoff selektiv an/in die Lagerung (14/12) transportierbar ist.

11. Nassraum-Baugruppe gemäß einem der vorhergehenden Ansprüche, **dadurch gekennzeichnet, dass**:
• wenigstens zweitweise ein Zufluss zu einem Schmierstoffkanal (300) ein Abschnitt des Schmierstoffkanals (300) ist;
• ein bestimmter Zufluss lediglich zeitweise ein Abschnitt des Schmierstoffkanals (300) ist;
• das Nassraum-Rotationsbauteil (10/20) eine gerade bzw. ungerade Anzahl von Abschnitten von Schmierstoffkanälen (300) aufweist;
• ein zweites Rotationsbauteil (20/10, 50, 60, 70, 72, 80, 90) eine ungerade bzw. gerade Anzahl von Abschnitten von Schmierstoffkanälen (300) aufweist;
• das Nassraum-Rotationsbauteil (10/20) zwei, drei, vier, fünf, sechs, sieben, acht, neun, zehn oder mehr Abschnitte von Schmierstoffkanälen (300) aufweist;
• ein zweites Rotationsbauteil (20/10, 50, 60, 70, 72, 80, 90) vier, fünf, sechs, sieben, acht, neun, zehn, elf, zwölf, dreizehn, vierzehn oder mehr Abschnitte von bzw. Zuflüsse zu den Schmierstoffkanälen (300) aufweist;
• eine Fläche der Öffnungen (302, 304) in der Lagerfläche (112, 212; 114, 214) ca. 15%, ca. 20%, ca. 25%, ca. 30%, ca. 35%, ca. 40%, ca. 45% oder ca. 50% einer Fläche der Lagerfläche (112, 212; 114, 214) oder einer Fläche einer in Umfangsrichtung (Um) vollständig geschlossenen, idealen Lagerfläche (112, 212; 114, 214) beträgt;
• der Schmierstoffkanal (300) zur Lagerung (14/12) hin in einer zum Schmierstoffkanal (300) zur Lagerung (12/14) hin analogen oder univoken Weise ausgebildet ist; und/ oder
• die Nassraum-Baugruppe (2) ein Nassraum-Rotationsbauteil (10/20) nach einem der Ansprüche 1 bis 5 aufweist.

12. Drehmomentübertragungseinrichtung, insbesondere Getriebe (0), Wandler (0) oder Torsionsschwingungsdämpfer (1) für ein Fahrzeug, wie einen Personenkraftwagen, ein Personentransportwagen, ein Nutzfahrzeug oder eine Baumaschine, **dadurch gekennzeichnet, dass**
die Drehmomentübertragungseinrichtung (0) ein Nassraum-Rotationsbauteil (10/20) nach einem der Ansprüche 1 bis 5 und/oder eine Nassraum-Baugruppe (2) nach einem der Ansprüche 2 bis 11 aufweist.
